# EUROPEAN PATENT APPLICATION

(11) **EP 4 708 116 A1**
(43) Date of publication of application: **11.03.2026**
(21) Application number: 25201265.3
(22) Date of filing: 09.09.2025
(51) Int. Cl.: G06F 40/109, G06F 40/166, G06T 13/80

(54) **SYSTEM AND METHOD FOR CUSTOMIZED TEXT ANIMATION**

(30) Priority: 10.09.2024 US 202418830485
(71) Applicant: Figma, Inc., San Francisco, CA 94102 (US)
(72) Inventor: COWBURN, Piers, San Francisco, 94102 (US); KRISTIANSEN, Martin, San Francisco, 94102 (US); MURRAY-BROWNE, Tim, San Francisco, 94102 (US); COLEMAN, Lia, San Francisco, 94102 (US)
(74) Representative: Morrall, Jonathan Ian McLachlan

(57) **Abstract**

Systems or methods for presenting or generating an animated realization of one or more letter glyphs based on progressively exposing a continuous mapping of brush head shapes following a letterform stroke order. A machine-learning model is used to generate animation metadata from the one or more letter glyphs. The animation metadata including a centerline, the continuous mapping of brush head shapes that is used to sweep along the centerline, and the letterform stroke order to generate the animated realization of the one or more letter glyphs.

## Description

### BACKGROUND

In the realm of digital video editing, software applications have offered an array of tools for creative manipulation. However, there remains a challenge when it comes to creating visual effects for unique typefaces. Conventional methods for animating text may involve laboriously masking out text elements and then animating the mask to reveal the text in front of a chosen font. This process is often time-consuming and requires manual effort. Recognizing these shortcomings, this patent addresses the need for a more efficient, text customization process that provides dynamic and seamless rendering of complex font effects.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example system configured to support user accounts in creating and managing collaborative content files in accordance with some aspects of the present technology.
FIG. 2 illustrates an example collaborative content editing service configured to support user accounts in creating and managing collaborative animating text objects in accordance with some aspects of the present technology.
FIG. 3 illustrates an example method for presenting an animated realization of one or more letter glyphs in accordance with some aspects of the present technology.
FIG. 4 illustrates an example method for training a machine-learning model for generating an animated realization of one or more letter glyphs in accordance with some aspects of the present technology.
FIG. 5 illustrates an example graphical user interface depicting an animation playback of a set of letter glyphs at a first instance in accordance with some aspects of the present technology.
FIG. 6 illustrates an example graphical user interface depicting an animation playback of a set of letter glyphs at a second instance in accordance with some aspects of the present technology.
FIG. 7 shows an example of computing system in accordance with some aspects of the present technology.
FIG. 8 illustrates an example neural network architecture in accordance with some aspects of the present technology.

### DETAILED DESCRIPTION

Conventionally, animating text involves a laborious process where individuals meticulously mask out text elements, followed by a separate animation of the mask to reveal the letter glyphs. This approach requires significant effort and attention to detail, as each frame needs to be carefully crafted to achieve the desired effect. The limitations of this method become apparent when working with variable fonts, which change throughout the sequence, requiring the animation to be done on a per-frame basis. Additionally, the process can be time-consuming and prone to errors, making it a less-than-ideal solution for achieving smooth and seamless text animations.

Furthermore, simply instructing conventional generative AI models to reveal the text through animation is not a feasible solution, as it would require the model to understand the nuances of letterforms and their relationships in various contexts. The model's ability to generate convincing animations would be hindered by its lack of understanding of typographic subtleties, such as font variations, stroke styles, and texture. As a result, relying solely on generative AI would likely produce unsatisfactory results, highlighting the need for more sophisticated approaches that combine a dynamic framework with an AI-based approach.

As an example, a machine-learning model may be customized to serve as a dynamic framework for animating texts. This may involve integrating a robust metadata input system that can accept and process centerlines and font information for one or more letter glyphs. The machine-learning model may then extrapolate a continuous mapping of brush head shapes tailored to the unique characteristics of each letter, which may be used to sweep along the designated centerline. By providing this framework, the machine-learning model may be empowered to adapt and generate an animated realization of the set of letter glyphs, taking into account subtle nuances in stroke style, texture, and spacing that reflects text being revealed as though it is being drawn by someone.

In some cases, the machine-learning model may receive one or more letter glyphs with novel profile shapes and may need to determine the centerline for those one or more letter glyphs. As such, the machine-learning model may determine a centerline for a set of letter glyphs based on trained data that may include annotated images of hand-drawn or printed fonts and the respective centerlines. The machine-learning model may be trained on datasets of annotated examples containing the centerlines of various letter glyphs and fonts, utilizing an iterative refinement process to converge on a stable representation of the centerline. This may involve presenting the model with a series of points that represent potential candidates for the centerline, which may then be refined through a series of adjustments until convergence is achieved, allowing the model to learn the patterns and features that define the centerline of each letter.

In some cases, the same machine-learning model or a different machine-learning model may be used to determine a continuous mapping of brush head shapes associated with the one or more letter glyphs that would be used to sweep along the designated centerline. The continuous mapping of brush head shapes may be continuously varying as a function of the position on the centerline that it is rendering from. In other words, the continuous mapping of brush head shapes may be a continuous mapping from a centerline position to a stamp, which may either be a raster image or a parameterized vector shape.

The machine-learning model may learn to predict a sequence of brush head shapes that accurately capture the nuances and characteristics of a profile shape of each glyph. This process may involve learning from a plurality of predefined profile shapes of various fonts. The profile shape may be a parametric representation of the overall shape and structure of the font, defining how the letter glyphs are composed and laid out. In some cases, the continuous mapping of brush head shapes respects a respective tapering associated with the profile shapes as decided by the original designers of the respective font. In other words, the continuous mapping of brush head shapes may expand and/or shrink in the right places to conform to the shapes of the underlined glyphs. For example, the font may have a paintbrush-like effect and the brush head shapes may reflect that as well by having splatter-like patterns to create the profile shape.

In some cases, the machine-learning model may learn to determine both the centerline and the continuous mapping of brush head shapes for digital letter glyphs or handwritten letter glyphs by being trained on a dataset containing annotated examples of individual letter glyphs, presented as images or glyphs. By learning to manipulate this profile shape through subtle variations in stroke width, curvature, and other characteristics, the model can effectively output a continuous mapping of brush head shapes. As such, in some cases, through an iterative refinement process, guided by supervised and reinforcement learning techniques, the machine-learning model may produce a continuous mapping of brush head shapes that accurately capture the essence of each letter's form.

In other words, the delivery of a font in an animation framework may not be associated with a traditional font file but rather, a calculated centerline, a letterform stroke order, and a continuous mapping of brush head shapes that is used to sweep along the centerline to generate an animated realization of the one or more letter glyphs. In some cases, the letterform stroke order also includes the direction of the strokes.

In some cases where the font is more of an intricate letterform or has unique nuances, the order of the stroke paths is important. For example, when the font is created by a watercolor brush such that where there is overlap, and a later stroke would bleed a previous stroke where they intersect, the machine-learning model is able to map out the order of the stroke paths in determining the letterform stroke order. As another example, if the font has an outline, to maintain the outline characteristic throughout the animation, when there is an intersection between two strokes, a next brush head shape may be used to correct previous outlines that are no longer relevant after there is an intersection. As such, the order of the stroke paths would inform how the brush head shape that creates the intersection should look.

In some cases, the letterform stroke order may be established based on well-known and customary handwritten forms. For example, it is well-known that for an "a", the loop is drawn first before the tail. However, for some fonts, the letterform stroke order may need to be determined by a machine-learning model that determines the letterform stroke order for a respective letter glyph based on a set of pre-trained data including annotated examples of letterform stroke orders of respective features.

In some cases, a customization interface may be provided. The customization interface may include a plurality of controls for customizing the centerline, the continuous mapping of brush head shapes, and/or the order of the letterform stroke order. The customization interface may service as a starting point for editing the fonts or creating new fonts. For example, the font itself may not have an italics version. However, by having a centerline defined, the brush head shapes may be altered or shifted in a way to form an italics version of the font. The weights of the brush head shapes may be altered to change how bold the letter glyphs are, and additionally, the centerline itself may be moved to change the shape of the letter glyphs.

In some cases, once the letter glyphs are drawn, they may be morphed into other shapes or fonts by changing the parameters of the continuous mapping of brush head shapes. In some cases, each letter glyph may be of a different font and the interpolation between one letter glyph to another may be based on using a smooth transitioning that is generated through a subset of brush head shapes.

Furthermore, different effects may be applied to the animation metadata including the centerline, the letterform stroke order, and the continuous mapping of brush head shapes, to further tweak the letter glyphs. For example, applying an outline or changing the boldness of the letter glyphs may be done after animation metadata has been generated in the form of effects. The effects may be applied before presenting the animated realization to change or add elements of the letter glyphs. Some effects may need to be performed when generating the animation metadata. For example, applying a slider, such as an italics slider that can change the amount of tilt of the letter glyphs, may also change the centerline and therefore should be performed when generating the animation metadata.

In addition, in some cases, 2D letter glyphs may be transformed into 3D letter animations. One aspect to consider is the positioning of the letterform in the 3D space. In order to avoid completely intersecting strokes of a letter glyph, the centerline may be slightly transformed in 3D space, either slightly forward or backward along the Z axis, to prevent conflicts with other parts of the design. This process can be automated through heuristics that take into account the geometry and centerline of the font, allowing for more precise control over the 3D letterform.

More specifically, the machine-learning model may be a part of a content editing service that integrates the metadata associated with the layers of the layered structure of a collaborative digital video editing service with a letter animating modifier that is guided based on different features stored in association with the separate layers. Presenting the animated realization of the one or more letter glyphs may be provided by the letter animating modifier, which may be provided a set of one or more input layers as guidance for generating the animated realization. The input layer may be selected layers that are used as guidance for modifiers such as the letter animating modifier. Each separate layer is a stackable, nestable container for content added to an interactive editing interface, a graphical interface on a client device where the user manipulates and edits visual aspects of the content file.

Modifiers, such as the letter animating modifier, may be used to provide a variety of non-destructive editing protocols that process image data and are arranged as pipelines. More than one modifier may be used for a content file and the output of a previous modifier in the pipeline may be taken as processed to derive some output which is then either passed to the next modifier in the pipeline or rendered to the screen.

Such integrations provide users with compositional control of how the different features are reflected in outputted computer-generated content. The computer-generated content may be the animated realization of the one or more letter glyphs generated by the letter animating modifier. The computer-generated content may be a 2D animation or a 3D animation.

As such, the present technology thus addresses current problems in the art by providing an integrated system that offers users a customizable, non-destructive, and . In this way, the present technology reduces each of the multiple action steps, which requires fewer burdens on both a computing system 700 (by needing to navigate to and render fewer interfaces) and a user (by reducing the number of steps they need to perform). Furthermore, the present technology also addresses current problems in the art by applying non-destructive editing holistically to an entire workflow of creating and editing content.

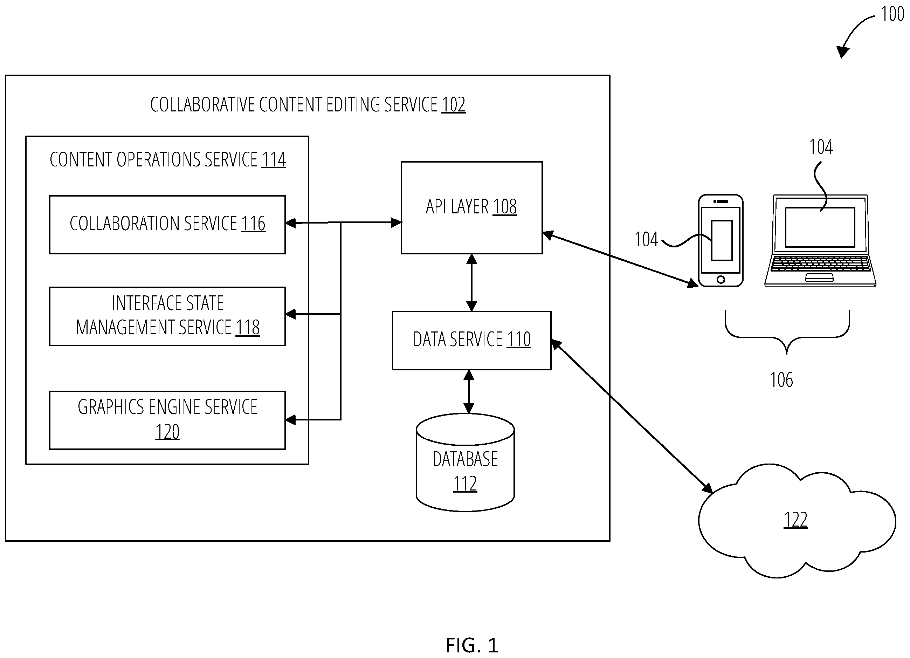

FIG. 1 illustrates an example system 100 configured to support non-destructive editing and creation of content based on a layered structure. In particular, the system 100 supports a plurality of user accounts interacting with each other in communities to which they belong.

The system 100 illustrates an example architecture in which users of user accounts interact through an instance of a client application 104 operating on a client device 106. The client application 104 can be provided by a web page rendered in a web browser or a downloaded client application executed by an operating system of the computing device. In some embodiments, some disparate collections of features or functionality might be available in client application 104 depending on the capabilities of the environment executing or rendering the client application 104.

The system 100 also includes a collaborative content editing service 102, which provides an infrastructure for supporting the plurality of user accounts to collaboratively create and edit layered content files. The content file may be a self-contained file set created at a collaborative content editing service. The collaborative content editing service 102 may be a distributed service hosted in a cloud computing architecture. The collaborative content editing service 102 may be responsible for hosting various services accessible to the user accounts by the client application 104.

As illustrated in FIG. 1, collaborative content editing service 102 provides a content operations service 114 that propagates state changes based on the edits made to the content files at the client application 104. In some cases, such changes may be propagated to a graphics engine service 120 that applies various features, such as filters and modifiers, to the content files. In some cases, when the content files are shared between two or more user accounts, such changes may be propagated to a collaboration service 116 to propagate such changes to the other instances of the client application 104 associated with the user accounts. In some cases, such changes may be propagated to an interface state management service 118 that assists with rendering and managing the different states.

A user account can operate their instance of the client application 104 to create or edit a content file on an interactive editing interface through the collaborative content editing service 102. The interactive editing interface may be a graphical interface on a client device where the user manipulates and edits visual aspects of the content file. In some embodiments, this will be performed by the client application 104 calling an API layer 108 requesting to create or edit the content file. The API layer 108 can then interact with internal services, such as the content operations service 114, the collaboration service 116, and the interface state management service 118, as well as external services to create or edit the content file. When the content file is created, the user account that created the content file may be considered the owner and/or administrator for the content file and may give permission to other user accounts to collaborate on the content file. The content operations service 114 may record the information about the content file using the data service 110 to store information about the content file in the database 112 and/or the cloud services 122.

As introduced above, the collaborative content editing service 102 provides holistic non-destructive editing throughout an entire workflow. In order to provide such non-destructive editing, layers are leveraged to render a final representation of the content file while keeping all the editing parameters separate and adjustable. The layers may be simply stackable, nestable containers for content added to an interactive editing interface. Layers may be defined by various metadata, such as an identifier, a parent layer identifier, an order of where the layer appears in the parent's list of children, a user-defined name, and an applied transformation.

Modifiers may be a variety of non-destructive editing concepts responsible for processing image data and are arranged as pipelines, typically taking the output of a previous modifier in the pipeline as their input, and processing this to derive some output which is then either passed to the next modifier in the pipeline, or rendered to the screen. Modifiers may include filter modifiers that are used for implementing an array of filter types, such as color transformation (e.g., Hue Saturation Lightness (HSL), levels/curves, Black and White (B&W) conversion, shadow/highlight adjustments, color remapping, etc.) and convolution (e.g., blur, sharpen, edge detection, etc.). In some cases, the implementation of the filter modifiers may be a fragment shader.

In addition, modifiers may animate certain features of the content file. In some cases, animation modifiers may include a letter animating modifier that may modify one or letter glyphs into an animated realization of the one or more letter glyphs by progressively exposing the continuous mapping of brush head shapes. The continuous mapping of brush head shapes may be continuously varying as a function of the position on the centerline that it is rendering from. In other words, the continuous mapping of brush head shapes may be a continuous mapping from a centerline position to a stamp, which may either be a raster image or a parameterized vector shape.

Depending on the order of the layers, in some cases, one or more animated features of a content file may be inputs for the letter animating modifier such that output frames with the animated features are modified based on the letter animating modifier. In some cases, if the inputs include other layers that modify the letter glyphs, such as changing their colors or textures in certain areas, such modifications may also be outputted by the letter animating modifier.

As introduced above, the interface state management service 118 supports various functions associated with state management and rendering the user interface. In some cases, the interface state management service 118 models the state of a content file that a user is editing in the interactive editing interface in the form of a content graph. The content graph may be a data structure and model that represents the content and the relationships between the layers of the content file.

In some cases, the interface state management service 118 may further load the bitmap data associated with imported content, which may be stored in the database 112 or the cloud services 122. A basic piece of functionality required by the collaborative content editing service 102 is for the user to be able to import content to use in their project. As such, the interface state management service 118 assists with the import and storage of binary bitmap data.

Furthermore, the interface state management service 118 may interface with the collaboration service 116 to synchronize document states with other users who are editing the same content file. The interface state management service 118 may further interface with the graphics engine service 120 by supplying the content file for rendering. In addition, the interface state management service 118 may capture and handle user input directly. For example, the interface state management service 118 may respond to interactions with a layers panel or a toolbar presented with the interactive editing interface. However, in cases that require low latency response times (e.g., dragging a layer, or painting in a layer), such input events may be piped directly to the graphics engine service 120 for processing.

As introduced above, the graphics engine service 120 supports various functions associated with rendering graphics content. For example, the graphics engine service 120 may receive the content graph from the interface state management service 118 and may translate the content graph into a processor graph. The processor graph may be an abstract representation of GPU and CPU operations and dataflow required to render the content file. In some cases, the graphics engine service 120 evaluates the processor graph in order to visualize the content file at the interactive editing interface.

Collaborative content editing service 102 also provides the collaboration service 116 that may interface with a multi-user state management library. In some cases, the collaboration service 116 interfaces with the interface state management service 118 to synchronize the content file to other users using the multi-user state management library.

In some embodiments, the collaborative content editing service 102 is configured such that the majority of communications between the collaborative content editing service 102 and the client application 104 pass through the API layer 108. The client application 104 can request responses from various services provided by the collaborative content editing service 102 from the API layer 108. Additionally, services within the collaborative content editing service 102 can communicate with each other by sending messages through the API layer 108. In some cases, the API layer 108 includes a WebSocket server that is used as a hub for client applications 104 to share information about states and changes to the states of the content file. Furthermore, the API layer 108 may assist with managing collaborative sessions by supporting extensions to allow the collaborative content editing service 102 to hook into the editing process for the purpose of storage, metrics, logging, and managing synchronization.

Although the collaborative content editing service 102 is described with respect to a particular system architecture and communication flow, it will be appreciated by those of ordinary skill in the art that other system configurations are possible. Furthermore, the collaborative content editing service 102 may not need to be collaborative and may be just a content editing service that provides such modifiers, such as the letter animating modifier.

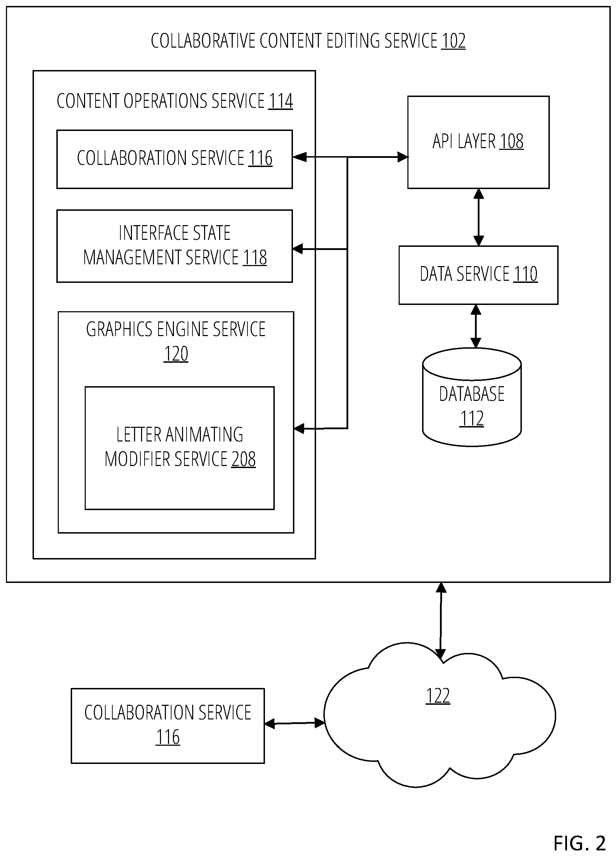

FIG. 2 illustrates an example collaborative content editing service configured to support user accounts in creating and managing collaborative animated content files in accordance with some aspects of the present technology.

In some cases, the content files may be animated files and/or include animated features. As such, to generate the animated features, a plurality of animation frames may be generated. The plurality of animation frames may be generated for display, and in some cases, the animation frames may complete a loop of a couple of seconds that may be displayed in a continuous loop in a preview interface. In some cases, the looping animation frames may be displayed in a preview interface, and changes made at an interactive editing interface may be displayed in real-time, or near real-time, alongside the interactive editing interface in the preview interface. Alternatively, the interactive editing interface may also be the preview interface, whereby the animation is played in the same frame that is receiving the changes.

In some cases, the animated content file may include one or more layers with animated features that are configured to be inputs to a letter animating modifier, such that each frame of the one or more layers with animated features may be generated by the letter animating modifier.

Although the collaborative content editing service 102 is described with respect to a particular system architecture and communication flow, it will be appreciated by those of ordinary skill in the art that other system configurations are possible. For example, the letter animating modifier service 208 may be a separate service from the graphics engine service 120.

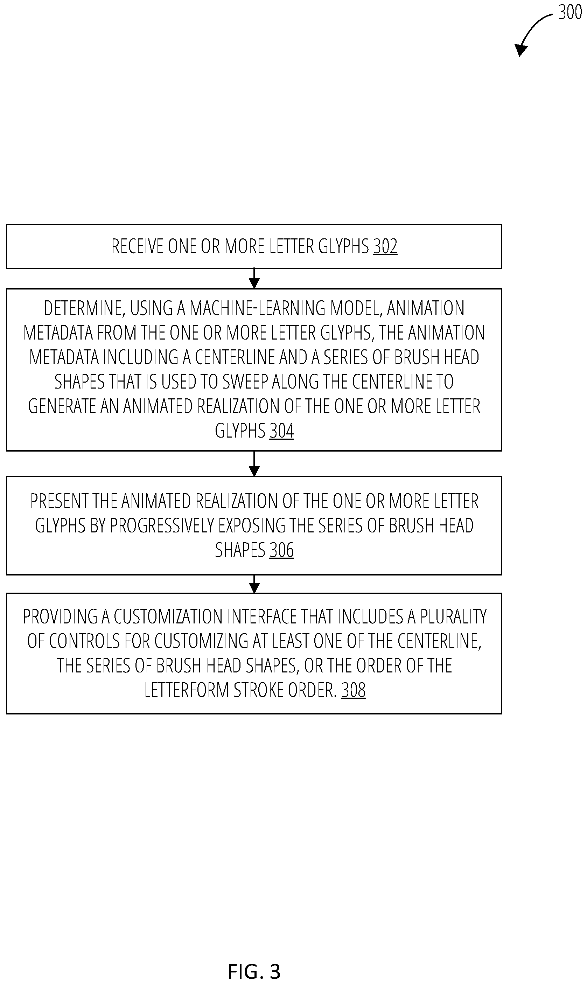

FIG. 3 illustrates an example method 300 for presenting an animated realization of one or more letter glyphs in accordance with some aspects of the present technology. Although the example method 300 depicts a particular sequence of operations, the sequence may be altered without departing from the scope of the present disclosure. For example, some of the operations depicted may be performed in parallel or in a different sequence that does not materially affect the function of the method 300. In other examples, different components of an example device or system that implements the method 300 may perform functions at substantially the same time or in a specific sequence.

In some cases, a run-time system of a content editing service, such as the collaborative content editing service 102, may perform one or more of these steps. The run-time system may be a client run-time system, a server run-time system, or a combination of the two.

According to some examples, the method includes receiving one or more letter glyphs at step 302. The one or more letter glyphs may be any alphabetic letter glyphs or logographic characters. In some cases, the letter animating modifier service 208 may receive the one or more letter glyphs. In some cases, the one or more letter glyphs may be received in various formats, including but not limited to: vector graphics (*e.g.,* SVG (Scalable Vector Graphics), EPS (Encapsulated PostScript), AI (Adobe Illustrator)), raster images, (*e.g.,* JPEG, PNG, GIF, BMP, TIFF), scanned images: (*e.g*., scanned PDFs, OCR (Optical Character Recognition) processed images), font files (*e.g.,* TTF (TrueType Font), OTF (OpenType Font), WOFF (Web Open Font Format)), 3D Models (*e.g*., STL (stereolithography), OBJ (Object File)), embedded formats (*e.g.,* embedded images in documents (DOCX, PDF), embedded images in presentations (PPTX)), handwritten or printed samples (*e.g.,* physical samples scanned or photographed into digital formats) or digital screenshots (*e.g.,* screenshots taken from digital displays or applications).

Once received, the letter animating modifier service 208 may need to first process the received media to extract the one or more letter glyphs into a format, such as a vectorized format, that indicates a profile outline for each of the letter glyphs.

According to some examples, the method includes determining, using a machine-learning model, animation metadata from the one or more letter glyphs at step 304. In some cases, the letter animating modifier service 208 may determine the animation metadata. In some cases, the animation metadata includes a centerline and a continuous mapping of brush head shapes that is used to sweep along the centerline to generate an animated realization of the one or more letter glyphs. In some cases, the animation metadata includes a letterform stroke order. In some cases, the continuous mapping of brush head shapes are progressively exposed following the letterform stroke order. In some cases, the letterform stroke order is established by the machine-learning model. In other cases, it may be determined afterwards.

In some cases, the machine-learning model may receive one or more letter glyphs with novel profile shapes and may need to determine the centerline for those one or more letter glyphs. The machine-learning model may determine a centerline for a set of letter glyphs based on trained data that may include annotated images of hand-drawn or printed fonts and the respective centerlines. The machine-learning model may be trained on datasets of annotated examples containing the centerlines of various letter glyphs and fonts, utilizing an iterative refinement process to converge on a stable representation of the centerline. This may involve presenting the model with a series of points that represent potential candidates for the centerline, which are then refined through a series of adjustments until convergence is achieved, allowing the model to learn the patterns and features that define the centerline of each letter.

In some cases, the same machine-learning model or a different machine-learning model may be used to determine a continuous mapping of brush head shapes associated with the one or more letter glyphs that would be used to sweep along the designated centerline. In some cases, if it is a different machine-learning model, the different machine-learning model may receive the centerline and the profile shapes of each glyph to determine the continuous mapping of brush head shapes.

Either case, the machine-learning model may learn to predict a sequence of brush head shapes that accurately capture the nuances and characteristics of a profile shape of each glyph. This process may involve learning from a plurality of predefined profile shapes of various fonts. The profile shape may be a parametric representation of the overall shape and structure of the font, defining how the letter glyphs are composed and laid out. In some cases, the continuous mapping of brush head shapes respects a respective tapering associated with the profile shapes as decided by the original designers of the respective font. In other words, the continuous mapping of brush head shapes expands and shrinks in the right places to conform to the shapes of the underlined glyphs. For example, the font may have a paintbrush-like effect and the brush head shapes may reflect that as well by having splatter-like patterns to create the profile shape.

In some cases, the machine-learning model may learn to determine both the centerline and the continuous mapping of brush head shapes for digital letter glyphs or handwritten letter glyphs by being trained on a dataset containing annotated examples of individual letter glyphs, presented as images or glyphs. By learning to manipulate this profile shape through subtle variations in stroke width, curvature, and other characteristics, the model can effectively output a continuous mapping of brush head shapes. As such, in some cases, through an iterative refinement process, guided by supervised and reinforcement learning techniques, the machine-learning model may produce the continuous mapping of brush head shapes that accurately capture the essence of each letter's form.

In cases where the font is more of an intricate letterform or has unique nuances, the order of the stroke paths is important. For example, when the font is created by a watercolor brush such that where there is overlap, and a later stroke would bleed a previous stroke where they intersect, the machine-learning model is able to map out the order of the stokes paths in a way that coordinates with the profile of each of the brush head shapes, in determining the letterform stroke order. As another example, if the font has an outline, in order to maintain the outline characteristic throughout the animation, when there is an intersection between two strokes, a next brush head shape may be used to correct previous outlines that are no longer relevant after there is an intersection. As such, the order of the stroke paths may inform how the brush head shape that creates the intersection should look for some letterforms.

According to some examples, the method includes presenting the animated realization of the one or more letter glyphs based on progressively exposing the continuous mapping of brush head shapes at step 306. In some cases, the animation metadata may be used to present the animated realization at the client device 106. In some cases, frames of the animated realization are generated that progressively expose the continuous mapping of brush head shapes, and are presented at the client device 106.

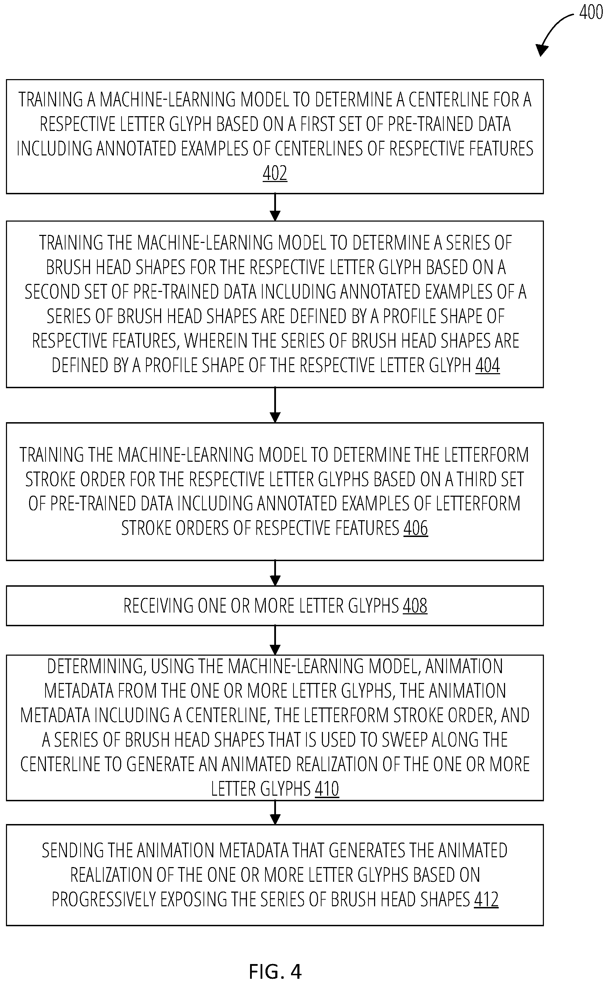

FIG. 4 illustrates an example method 400 for training a machine-learning model for generating an animated realization of one or more letter glyphs in accordance with some aspects of the present technology. Although the example method 400 depicts a particular sequence of operations, the sequence may be altered without departing from the scope of the present disclosure. For example, some of the operations depicted may be performed in parallel or in a different sequence that does not materially affect the function of the method 400. In other examples, different components of an example device or system that implements the method 400 may perform functions at substantially the same time or in a specific sequence.

According to some examples, the method includes training a machine-learning model to determine a centerline for a respective letter glyph based on a first set of pre-trained data including annotated examples of centerlines of respective features at step 402. In some cases the respective features and the centerlines may be annotated by human experts and/or automated tools.

According to some examples, the method includes training the machine-learning model to determine a continuous mapping of brush head shapes for the respective letter glyph at block 404. The training may be based on a second set of pre-trained data including annotated examples of a continuous mapping of brush head shapes defined by a profile shape of respective features. In some cases, the continuous mapping of brush head shapes are defined by a profile shape of the respective letter glyph. In some cases, the annotated examples of a continuous mapping of brush head shapes may be annotated by human experts and/or automated tools.

According to some examples, the method includes training the machine-learning model to determine the letterform stroke order for the respective letter glyph at block 406. In some cases, the training is based on a third set of pre-trained data including annotated examples of letterform stroke orders of respective features. In some cases, the annotated examples of letterform stroke orders of respective features may be annotated by human experts and/or automated tools. In some cases, the letterform stroke order may be established based on well-known and customary handwritten forms. However, for some fonts, the letterform stroke order may need to be determined by a machine-learning model is trained to determine the letterform stroke order for the respective letter glyph based on a third set of pre-trained data including annotated examples of letterform stroke orders of respective features.

Similar to FIG. 3, according to some examples, the method may include receiving one or more letter glyphs at step 408. According to some examples, the method includes determining, using the machine-learning model, animation metadata from the one or more letter glyphs. In some cases, the animation metadata may include a centerline, the letterform stroke order, and a continuous mapping of brush head shapes that is used to sweep along the centerline to generate an animated realization of the one or more letter glyphs at step 410.

According to some examples, the method includes sending the animation metadata that generates the animated realization of the one or more letter glyphs based on progressively exposing the continuous mapping of brush head shapes at step 412.

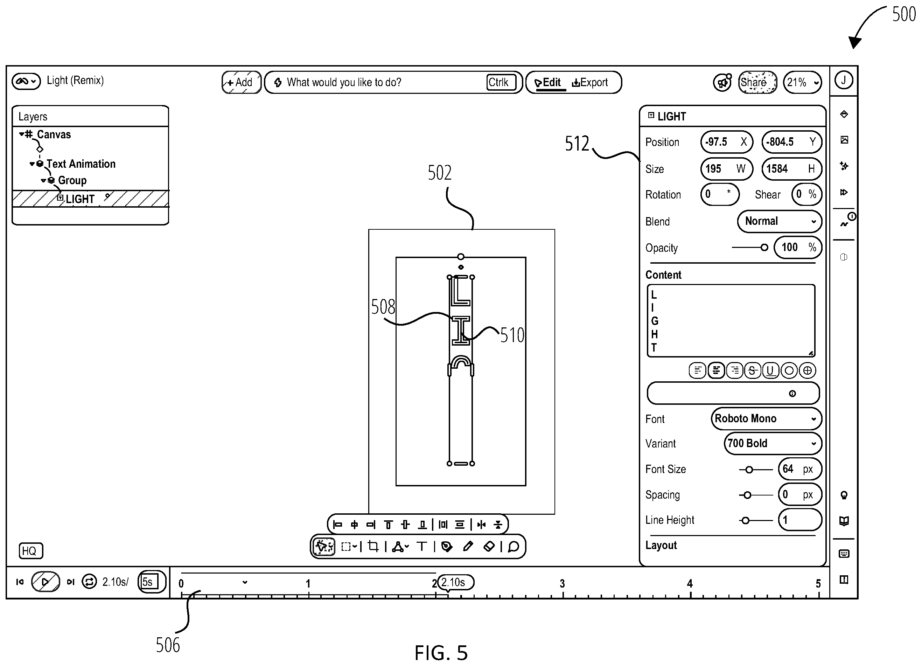

FIG. 5 illustrates an example graphical user interface depicting an animation playback of a set of letter glyphs at a first instance in accordance with some aspects of the present technology.

The example graphical user interface 500 includes an interactive editing interface 502 may receive edits to the one or more letter glyphs and may also serve as a preview interface and display a playback of the animated realization. Alternatively, a separate preview interface may display the playback.

In some cases, the animated realization of the one or more letter glyphs based on progressively exposing the continuous mapping of brush head shapes may be displayed as a continuous loop through animation frames over a period of time.

As shown in the layers interface 504, the letter animating modifier service 208 is applied to a child layer "L I G H T" but may be applied to a group of layers as well. In other words, the features of the child layer "L I G H T" may be inputs through the letter animating modifier service 208. The features extracted from the child layer may include the letter glyphs "L" "I" "G" "H" "T" and the font metadata. In some cases, the letter glyphs "L" "I" "G" "H" "T" and/or the font metadata may be inputs to the machine-learning model of the letter animating modifier service 208.

A customization interface 512 may be provided as a panel as well and may provide more insights and customization options for the selected letter glyphs. For example, in FIG. 5, the customization interface 512 includes the "Content" including the letter glyphs "L" "I" "G" "H" "T" the font "Roboto Mono", the variant "700 Bold", font size, spacing, etc. Some customizations may be performed before the generation of the animated realization, while others may be customized after and in real-time.

As shown in FIG. 5, the preview of the animated realization shows that the "L" and "I" have already been revealed and the "G" is in the middle of being revealed, aligning with the timeline shown in player interface 506, in a first instance. The continuous mapping of brush head shapes may sweep along a centerline 510 (shown in FIG. 5 but may or may not appear to the user).

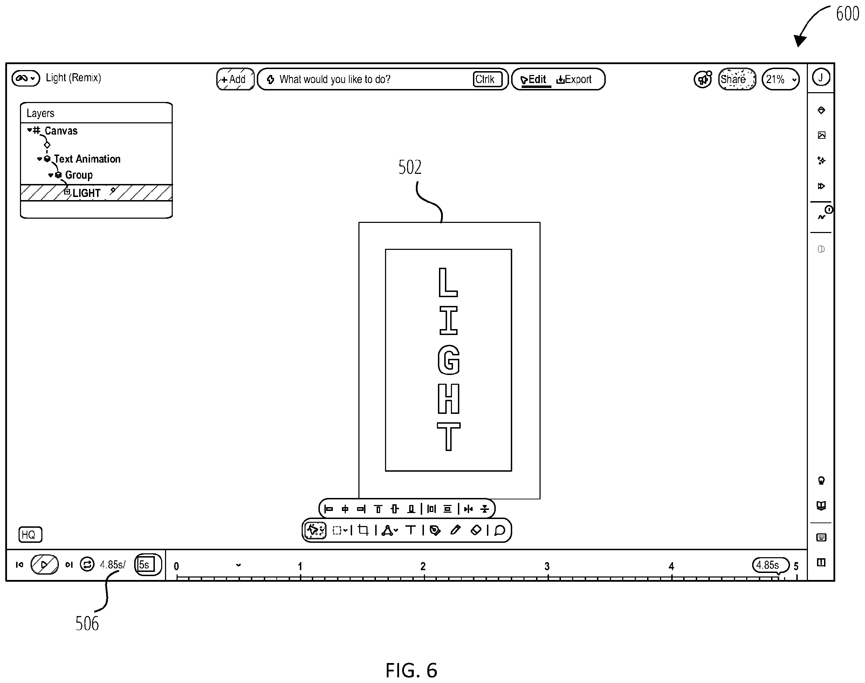

FIG. 6 illustrates an example graphical user interface depicting an animation playback of a set of letter glyphs at a second instance in accordance with some aspects of the present technology.

In a second instance, the preview of the animated realization shows all of the letter glyphs revealed, aligning with the timeline shown in player interface 506 of FIG. 6. While this font is rather simple, it can be imagined that more complex fonts have a more complex brush stroke to sweep along the centerline. In some cases, playback is controlled by the player interface 506.

In some cases, providing the customization interface 512 allows for customizing at least one of the centerline, the continuous mapping of brush head shapes, or the order of the letterform stroke order. By allowing the letter glyphs to be customized, the original font of the letter glyphs may turn into a variable font. For example, the font itself may not have an italics version but by having a centerline defined, the brush head shapes may be altered or shifted in a way to form an italics version of the font.

In some cases, the weights of the brush head shapes may be altered to change how bold the letter glyphs are. In some cases, changing the weights may change the appearance of pressure of the brush. In some cases, each letter glyph may be a different font and the interpolation between one letter glyph to another may be based on using a smooth transitioning that is generated through a subset of brush head shapes.

In some cases, after the centerline 510 is established, the centerline 510 may be further manipulated to change the shape of the letter glyphs. The brush head shapes may also be changed, which may change aspects like boldness. In some cases, the user may choose to change the brush head shapes completely. Such users may use the customization interface 512 as a starting point for editing the fonts or creating new fonts. In such cases, the brush head shapes may be morphed into other shapes or fonts by changing the parameters of the continuous mapping of brush head shapes. In some cases, the letterform stroke order may be a random order, doing the letters non sequentially, choosing strokes in order of height, or other type of custom rule determined by a user or a model.

Furthermore, different effects may be applied to the animation metadata including the centerline, the letterform stroke order, and the continuous mapping of brush head shapes, to further tweak the letter glyphs. For example, applying an outline or changing the boldness of the letter glyphs may be done after animation metadata has been generated in the form of effects. The effects may be applied before presenting the animated realization to change or add elements of the letter glyphs. Some effects may need to be performed when generating the animation metadata. For example, applying an italics slider that can change the amount of tilt of the letter glyphs would also change the centerline and therefore should be performed when generating the animation metadata. In some cases, using the customization interface 512, the user may select a new starting point for a new letterform stroke order.

In some cases, the customization may allow for one or more letter glyphs may be drawn in parallel and it may not read from the first letter to the last letter of a word. Additionally, the centerlines of each letter glyph may be disjointed or in some cases, joined and not having any brush head shapes visible for the parts that are not part of the letter glyphs.

In some cases, 2D letter glyphs may be transformed 3D letter animations. One aspect to consider is the positioning of the letterform. In order to avoid completely intersecting strokes of a letter glyph, the centerline may be slightly transformed in 3D space, either slightly forward or backward along the Z axis, to prevent conflicts with other parts of the design. This process can be automated through heuristics that take into account the geometry and centerline of the font, allowing for more precise control over the 3D letterform.

Lastly, because the centerline 510 is established, the brush head shapes themselves may morph into other shapes or fonts that are arranged around a centerline while the animation plays through. In other words, in some cases, once a letter glyph is completely revealed, it can morph into another shape or font with a same centerline 510. The animation may also allow the centerline to move and morph into other shapes, providing a fluid and dynamic approach to animate letter glyphs. Additional decorations, adornments, or objects may also be rendered in relation to the centerline. For example, bolts may be depicted down the centerline 510 of one or more of the letter glyphs. As such, creations and placement of additional geometries may be placed in relation to the centerline 510. Such renderings may stack on top of one another and the order of such renders may be controlled, either as layers or as another type of parameter. For example, the watercolor brush example reference above and the outline example may be stacked on top of each other.

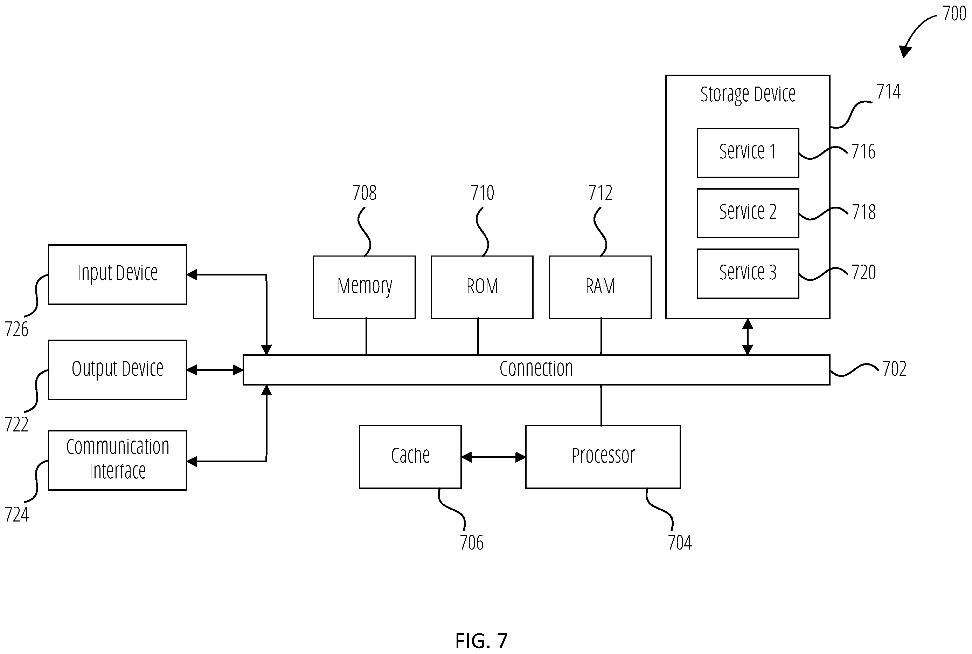

FIG. 7 shows an example of computing system 700, which can be for example any computing device making up collaborative content editing service 102 or client devices 106, or any component thereof in which the components of the system are in communication with each other using connection 702. Connection 702 can be a physical connection via a bus, or a direct connection into processor 704, such as in a chipset architecture. Connection 702 can also be a virtual connection, networked connection, or logical connection.

In some embodiments, computing system 700 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 700 includes at least one processing unit (CPU or processor) processor 704 and connection 702 that couples various system components including system memory 1108, such as read-only memory (ROM) 710 and random access memory (RAM) 712 to processor 704. Computing system 700 can include a cache of highspeed memory 708 connected directly with, in close proximity to, or integrated as part of processor 704.

Processor 704 can include any general purpose processor and a hardware service or software service, such as services 716, 718, and 720 stored in storage device 714, configured to control processor 704 as well as a special-purpose processor where software instructions are incorporated into the actual processor design. Processor 704 may essentially be a completely self-contained computing system, containing multiple cores or processors, a bus, memory controller, cache, etc. A multi-core processor may be symmetric or asymmetric.

To enable user interaction, computing system 700 includes an input device 726, which can represent any number of input mechanisms, such as a microphone for speech, a touch-sensitive screen for gesture or graphical input, keyboard, mouse, motion input, speech, etc. Computing system 700 can also include output device 722, which can be one or more of a number of output mechanisms known to those of skill in the art. In some instances, multimodal systems can enable a user to provide multiple types of input/output to communicate with computing system 700. Computing system 700 can include communication interface 724, which can generally govern and manage the user input and system output. There is no restriction on operating on any particular hardware arrangement, and therefore the basic features here may easily be substituted for improved hardware or firmware arrangements as they are developed.

Storage device 714 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 714 can include software services, servers, services, etc., that when the code that defines such software is executed by the processor 704, it causes the system to perform a function. In some embodiments, a hardware service that performs a particular function can include the software component stored in a computer-readable medium in connection with the hardware components, such as processor 704, connection 702, output device 722, etc., to carry out the function.

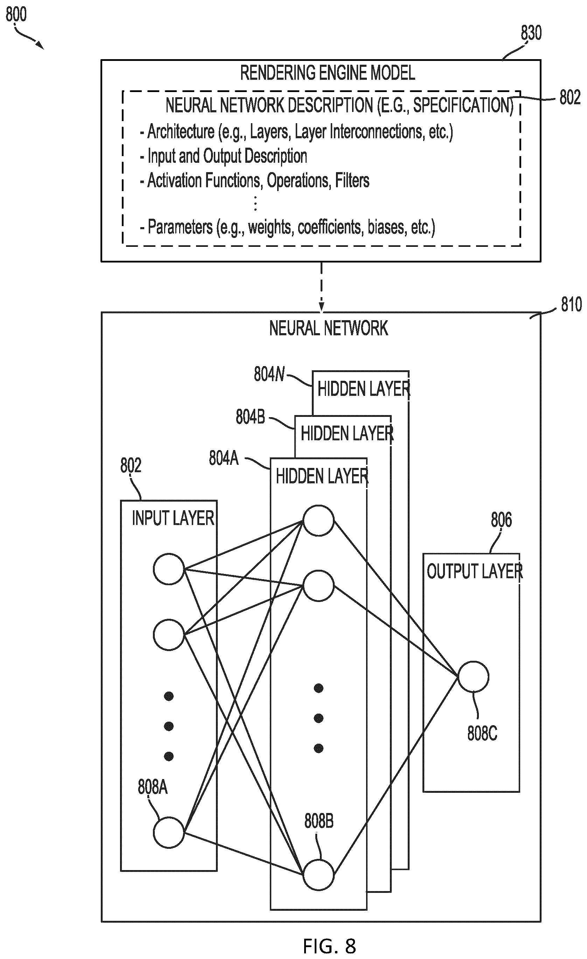

FIG. 8 illustrates an example neural network architecture in accordance with some aspects of the present technology. Architecture 800 includes a neural network 810 defined by an example neural network description 820 in rendering engine model (neural controller) 830. The neural network 810 can represent a neural network implementation of a rendering engine for rendering media data. The neural network description 820 can include a full specification of the neural network 810, including the neural network architecture 800. For example, the neural network description 820 can include a description or specification of the architecture 800 of the neural network 810 (e.g., the layers, layer interconnections, number of nodes in each layer, etc.); an input and output description which indicates how the input and output are formed or processed; an indication of the activation functions in the neural network, the operations or filters in the neural network, etc.; neural network parameters such as weights, biases, etc.; and so forth.

The neural network 810 reflects the architecture 800 defined in the neural network description 820. In this example, the neural network 810 includes a neural network input layers 802a through 1402n (collectively "802" hereinafter), which includes input data, such as input layers as described in FIGS. 2 and 3. In one illustrative example, the input layers can include data representing a portion of the input media data such as a patch of data or pixels (e.g., a 128 x 128 patch of data) in an image corresponding to the input media data (e.g., that of input layers as described in FIGS. 2 and 3). For clarification, the term "input layer" as described in at least FIGS. 2 and 3 are different from the neural network input layers as described in FIG. 8.

The neural network 110 includes neural network output layers 806a through 1404n (collectively "1404" hereinafter). The neural network hidden layer 804 can include *n* number of hidden layers, where *n* is an integer greater than or equal to one. The number of hidden layers can include as many layers as needed for a desired processing outcome and/or rendering intent. The neural network 810 further includes an output layer that provides an output (e.g., computer-generated content) resulting from the processing performed by the hidden layers 104. In one illustrative example, the neural network output layer 806 can provide one or more output layers of the computer-generated content.

The neural network 810 in this example is a multi-layer neural network of interconnected nodes. Each node can represent a piece of information. Information associated with the nodes is shared among the different layers and each layer retains information as information is processed. In some cases, the neural network 810 can include a feed-forward neural network, in which case there are no feedback connections where outputs of the neural network are fed back into itself. In other cases, the neural network 810 can include a recurrent neural network, which can have loops that allow information to be carried across nodes while reading in input.

Information can be exchanged between nodes through node-to-node interconnections between the various layers. Nodes 808a of the neural network input layer 802 can activate a set of nodes 808b in the first neural network hidden layer 804a. For example, as shown, each of the input nodes 808a of the neural network input layer 802a is connected to each of the nodes of the first neural network hidden layer 804a. The nodes 808b of the neural network hidden layer 804b can transform the information of each input node by applying activation functions to the information. The information derived from the transformation can then be passed to and can activate the nodes of the next hidden layer (e.g., 1404b), which can perform their own designated functions. Example functions include convolutional, up-sampling, data transformation, pooling, and/or any other suitable functions. The output of the hidden layer (e.g., 1404b) can then activate nodes of the next hidden layer (e.g., 1404*n*), and so on. The output of the last hidden layer can activate one or more nodes of the neural network output layer 806, at which point an output is provided. In some cases, while nodes (e.g., nodes 1408a, 1408a, 1408c) in the neural network 810 are shown as having multiple output lines, a node has a single output and all lines shown as being output from a node represent the same output value.

In some cases, each node or interconnection between nodes can have a weight that is a set of parameters derived from training the neural network 810. For example, an interconnection between nodes can represent a piece of information learned about the interconnected nodes. The interconnection can have a numeric weight that can be tuned (e.g., based on a training dataset), allowing the neural network 810 to be adaptive to inputs and able to learn as more data is processed.

The neural network 810 can be pre-trained to process the features from the data in the neural network input layer 802 using the different neural network hidden layers 804 in order to provide the output through the neural network output layer 806. In an example in which the neural network 810 is used to generate a computer-generated content, the neural network 810 can be trained using training data that includes a diverse set of images covering a range of features and styles such that patterns, textures, structures are used as examples to generate novel images. For instance, training images can be input into the neural network 810, which can be processed by the neural network 810 to generate outputs which can be used to tune one or more aspects of the neural network 810, such as weights, biases, etc.

In some cases, the neural network 810 can adjust weights of nodes using a training process called backpropagation. Backpropagation can include a forward pass, a loss function, a backward pass, and a weight update. The forward pass, loss function, backward pass, and parameter update is performed for one training iteration. The process can be repeated for a certain number of iterations for each set of training media data until the weights of the layers are accurately tuned.

For a first training iteration for the neural network 810, the output can include values that do not give preference to any particular class due to the weights being randomly selected at initialization. For example, if the output is a vector with probabilities that the object includes different product(s) and/or different users, the probability value for each of the different product and/or user may be equal or at least very similar (e.g., for ten possible products or users, each class may have a probability value of 0.1). With the initial weights, the neural network 810 is unable to determine low level features and thus cannot make an accurate determination of what the classification of the object might be. A loss function can be used to analyze errors in the output. Any suitable loss function definition can be used.

The loss (or error) can be high for the first training dataset (e.g., images) since the actual values will be different than the predicted output. The goal of training is to minimize the amount of loss so that the predicted output comports with a target or ideal output. The neural network 810 can perform a backward pass by determining which inputs (weights) most contributed to the loss of the neural network 810, and can adjust the weights so that the loss decreases and is eventually minimized.

A derivative of the loss with respect to the weights can be computed to determine the weights that contributed most to the loss of the neural network 810. After the derivative is computed, a weight update can be performed by updating the weights of the filters. For example, the weights can be updated so that they change in the opposite direction of the gradient. A learning rate can be set to any suitable value, with a high learning rate including larger weight updates and a lower value indicating smaller weight updates.

The neural network 810 can include any suitable neural or deep learning network. One example includes a convolutional neural network (CNN), which includes an input layer and an output layer, with multiple hidden layers between the input and output layers. The hidden layers of a CNN include a series of convolutional, nonlinear, pooling (for downsampling), and fully connected layers. In other examples, the neural network 810 can represent any other neural or deep learning network, such as an autoencoder, a deep belief nets (DBNs), a recurrent neural networks (RNNs), etc.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

## Claims

1. A computer-implemented method comprising:
receiving one or more letter glyphs of a content file;
determining, using a machine-learning model, animation metadata from the one or more letter glyphs, the animation metadata including a centerline and a continuous mapping of brush head shapes that is used to sweep along the centerline to generate an animated realization of the one or more letter glyphs; and
sending the animation metadata that generates the animated realization of the one or more letter glyphs based on progressively exposing the continuous mapping of brush head shapes.

2. The computer-implemented method of claim 1, wherein the animation metadata includes a letterform stroke order, and wherein the continuous mapping of brush head shapes is progressively exposed following the letterform stroke order.

3. The computer-implemented method of claim 2, further comprising:
providing a customization interface that includes a plurality of controls for customizing at least one of the centerline, the continuous mapping of brush head shapes, or the letterform stroke order.

4. The computer-implemented method of claim 3, further comprising:
displaying at least one of the centerline, the continuous mapping of brush head shapes, or the letterform stroke order; and
receiving a custom change from the customization interface to at least one of the centerline, the continuous mapping of brush head shapes, or the order of the letterform stroke order.

5. The computer-implemented method of claim 4, wherein the custom change includes:
receiving a new starting point for one of the letter glyphs to change the letterform stroke order; and
determining, by the machine-learning model, a new letterform stroke order based on the new starting point.

6. The computer-implemented method of claim 4 or 5, wherein the custom change includes changing at least one of the brush head shapes by changing a parameter at the customization interface.

7. The computer-implemented method of any of claims 4 to 6, wherein the custom change includes manipulating at least one of the centerline or the brush head shapes on an interactive editing interface that is a graphical interface where visual aspects of the content file are edited.

8. The computer-implemented method of any of claims 4 to 7, wherein the custom change includes applying an effect or stackable rendering to the one or more letter glyphs after the animated realization is generated.

9. The computer-implemented method of claim 8, wherein the effect is transforming the one or more letter glyphs to a 3D letterform and adjusting the centerline in 3D space along a Z axis.

10. The computer-implemented method of any of claims 2 to 9, further comprising:
training the machine-learning model to determine the letterform stroke order for the respective letter glyph based on a third set of pre-trained data including annotated examples of letterform stroke orders of respective features.

11. The computer-implemented method of any preceding claim, further comprising:
training the machine-learning model to determine a centerline for a respective letter glyph based on a first set of pre-trained data including annotated examples of centerlines of respective features.

12. The computer-implemented method of any preceding claim, further comprising:
training the machine-learning model to determine the continuous mapping of brush head shapes for the respective letter glyphs based on a second set of pre-trained data including annotated examples of continuous mapping of brush head shapes defined by a profile shape of respective features, wherein the continuous mapping of brush head shapes is defined by profile shapes of the respective letter glyphs.

13. A computing device comprising:
one or more processors; and
memory storing instructions that, when executed by the one or more processors, configure the computing device to:
receive one or more letter glyphs;
determine, using a machine-learning model, animation metadata from the one or more letter glyphs, the animation metadata including a centerline, a continuous mapping of brush head shapes that is used to sweep along the centerline, and a letterform stroke order to generate an animated realization of the one or more letter glyphs; and
present the animated realization of the one or more letter glyphs based on progressively exposing the continuous mapping of brush head shapes following the letterform stroke order.

14. The computing device of claim 13, wherein the animation metadata includes the letterform stroke order, and wherein the continuous mapping of brush head shapes is progressively exposed follow the letterform stroke order.

15. The computing device of claim 14, wherein the instructions further configure the computing device to:
provide a customization interface that includes a plurality of controls for customizing at least one of the centerline, the continuous mapping of brush head shapes, or the letterform stroke order.
